Europäisches Patentamt

European Patent Office

Office européen des brevets

(19)

(11) **EP 0 955 722 B1**

(12) **EUROPEAN PATENT SPECIFICATION**

(45) Date of publication and mention
of the grant of the patent:
**05.07.2006 Bulletin 2006/27**

(51) Int Cl.:
*H02P 6/08* *(2006.01)*        *H02P 6/14* *(2006.01)*

(21) Application number: **99200465.5**

(22) Date of filing: **19.02.1999**

(54) **A method of pwm driving a brushless motor with digitally stored voltage profiles with reduced losses**

Verfahren zum PWM Antrieb eines bürstenlosen Motors mit digital gespeicherten Spannungsprofilen und reduzierten Verlusten

Méthode de commande par MLI d'un moteur sans balais avec profils de tension mémorisés numériquement et pertes réduites

(84) Designated Contracting States:
**DE FR GB IT**

(30) Priority: **05.05.1998 EP 98830270**

(43) Date of publication of application:
**10.11.1999 Bulletin 1999/45**

(73) Proprietor: **STMicroelectronics S.r.l.**
**20041 Agrate Brianza (Milano) (IT)**

(72) Inventors:
• **Galbiati, Ezio**
**26020 Agnadello (IT)**
• **Boscolo, Michele**
**30019 Sottomarina (IT)**

• **Viti, Marco**
**20099 Sesto San Giovanni (IT)**

(74) Representative: **Pellegri, Alberto et al**
**c/o Società Italiana Brevetti S.p.A.**
**Piazza Repubblica, 5**
**21100 Varese (IT)**

(56) References cited:
**EP-A- 0 800 263        US-A- 5 283 510**
**US-A- 5 589 746**

• **PATENT ABSTRACTS OF JAPAN vol. 096, no. 004, 30 April 1996 (1996-04-30) -& JP 07 327393 A (SANYO ELECTRIC CO LTD), 12 December 1995 (1995-12-12)**

**Description**

FIELD OF APPLICATION OF THE INVENTION

The present invention relates to techniques for driving an electronically DC switched motor usually known as brushless motor.

BACKGROUND OF THE INVENTION

Usually this type of motors are driven by appropriately exciting the motor's phase windings synchronously with the instantaneous position of the rotor. More precisely, this is done by sequentially exciting two of the motor's windings with positive and negative voltages respectively, leaving a third phase winding in a high impedance state. When a driving "sensorless" brushless motor, the non excited phase winding is exploited for detecting the rotor's position.

According to a novel driving technique, described and illustrated in the European patent application No. 96830180.4, filed on 29 March 1996, in the name of the same applicant, on the motor's phase windings are sequentially applied or forced excitation voltages or currents. These currents or voltages rather than having a certain substantially constant level during each switching phase, have a certain profile (that is they have not a constant value) which may be predefined, digitized and stored in a read only memory, such as for instance an EPROM or EEPROM.

The predefined cyclic or alternate profile may be sinusoidal or more generally the result of a Fourier sum of harmonics of a fundamental frequency.

In practice, this innovative driving technique permits to optimize the torque characteristics of the motor by allowing for the predefinition of the most suitable cyclic waveform of the excitation voltage or current that is applied to or forced on the motor's phase windings.

During each switching phase, the driving current or voltage, does not correspond to a certain constant value as it was common in more traditional driving systems, instead it corresponds to certain profile congruent with (a portion of) the whole predefined cyclic or alternate waveform. In other words, during each switching phase, the winding's driving signal level follows precisely a segment of said predefined waveform.

A second European patent application No. 96830190.3, filed on 4 April 1996, in the name of the same applicant, describes an outstandingly efficient technique for synchronizing the sequence of excitation phases in respect to the actual rotor's position in order to optimize the torque characteristic of a driving system as that of the prior patent application No. 96830180.4.

According to the patent application No. 96830295.0, at each instant the three BJT or MOS half bridges, coupled to the respective three motor's phase windings, are driven in a PWM mode. Moreover, if the motor is connected in star configuration, being CT the star center and Vcc the supply voltage, the CT assumes a voltage equal to Vcc/2, therefore the maximum voltage swing that is available on each motor's winding is limited to $\pm$Vcc/2. At the same time, the differential voltage swing (phase-phase) is limited to $\pm \dfrac{Vcc}{2} * \sqrt{3}$ .

OBJECT AND SUMMARY OF THE INVENTION

The object of the present invention is a driving system for multiphase brushless motors that cyclically during any of the switching phases applies an appropriate voltage to a number of phase windings of the motor according to a PWM modulation while keeping at least one phase winding in either a low or a high saturation state (that is with a duty cycle of 0% or 100% respectively).

In such a driving system, being the PWM drive signal applied only to a reduced number of windings at a time, while at least one winding is kept on a stable saturation state, a direct consequence is that switching losses are reduced, as compared to a solution where all the windings are simultaneously driven with a substantially non null voltage signal. Moreover, the driving system as a whole is simplified.

In addition, this system allows an enhanced maximum voltage swing on the terminals of the windings.

According to the present invention, the most effective profile of the driving waveform to be applied cyclically, to the terminals of the motor's windings for producing the required differential voltage on all the phase windings is determined.

In fact, while there may be an infinite number of possible functions f(t) for the drive or line voltages (the signal applied between each terminal of the motor and ground) such to produce a desired differential voltage (phase-to-phase), there is only one function that optimizes the performances in terms of dissipated power and voltage swing.

The computation will be described hereinbelow for the case of a three-phase motor (N=3) but it is applicable also to any other multiphase motor.

In such a sample case, the three voltages, each having its profile described by f(t), will have to be applied to the respective motor windings with a relative phase shift of 120°, thus constituting three profiles $f_i(t)$, where i=1,2,3.

At any instant, there is always one of the three profiles $f_i(t)$, i=1,2,3, that presents a voltage, refereed to ground, lower than the other two. A function p(t) may be defined such that at any instant assumes the lowest one of the values of the $f_i(i)$ three functions, at that specific instant: $p(t)=\min\{f_1(t); f_2(t); f_3(t)\}$.

The cyclical voltage profile, referred to ground potential, to be applied to each phase winding terminal is given by:

$$g_i(t)=f_i(t)-p(t) \qquad\qquad (i=1,2,3)$$

Similarly, it is possible to identify a function p'(t), such that $p'(t)=\max\{f_1(t); f_2(t); f_3(t)\}$, from which new profiles: $g'_i(t)$: $g'_i(t)=M-p'(t)+f_i(t)$, where M is the absolute maximum value of f(t) of the entire period, may be defined.

The profiles $g_i(t)$ and $g'_i(t)$, thus obtained are the profiles that, according to the present invention, must be applied to the two phase windings that must be driven in that particular switching phase.

The ensuing description describes the case of a switching-mode driving system for a three-phase star connected motor, where f(t) is sinusoidal [f(t)=sin(t)]. Moreover, for storing the digitized profiles, it will be assumed, by way of example, the use of 8-bits wide memory registers, notwithstanding the fact that the system may be easily expanded to the desired dimension.

In general, the present invention is applicable to any motor irrespective of its electrical configuration.

<u>BRIEF DESCRIPTION OF THE DRAWINGS</u>

The various aspects and advantages of the invention will become even clearer through the following description of the architecture and the functioning of a system of the invention, according to an embodiment thereof, and by referring to the annexed drawings, wherein is has been assumed to apply the invention to the case of a three-phase motor.

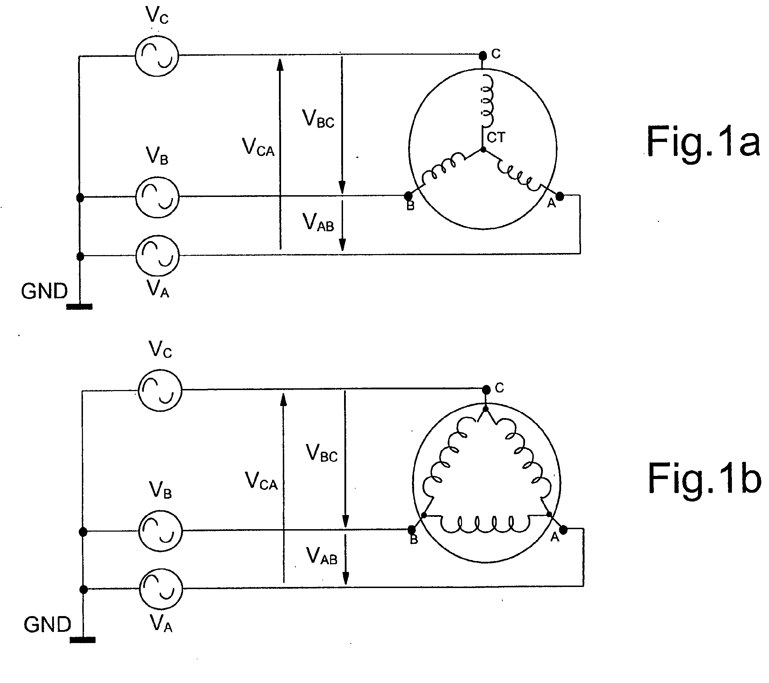

**Figure 1a** represents a three-phase motor connected in star configuration driven by Va, Vb, Vc, Vline voltages. In the same figure are also represented the differential phase-phase voltages (Vca, Vcb, Vba).

**Figure 1b** represents a three-phase motor connected in delta configuration driven by Va, Vb, Vc, Vline voltages. In the same figure are also represented the differential phase-phase voltages (Vca, Vcb, Vba).

**Figure 2** represents the three sinusoidal line voltage profiles (the line voltage being referred to ground) that are cyclically applied to the three-phase windings of a brushless motor according to the driving method described in the prior patent application No. 96830295.0;

**Figure 3a** represents three voltage line profiles (the voltage being referred to ground) that are cyclically applied to the three-phase windings of a brushless motor driven according to the present invention, maintaining in a low saturation state one of the three windings;

**Figure 3b** shows the sinusoidal waveform of the voltage on the terminal of the motor phase winding A deriving from the difference between the voltage that is being applied to this winding and the CT, when applying the profiles of Fig. 3a to the three-phase windings of the motor connected in star configuration.

**Figure 3c** shows the differential voltage between the terminals A and B deriving from the difference between the voltage that is being applied to the winding A and the winding B, when applying the profile of the figure 3a to the three-phase windings of the motor.

**Figures 4a, 4b and 4c** represent the voltage profiles of Fig. 3, scaled by a factor $\cong 1.14$ in order to fully exploit the available dynamic, from 0 to 255, when using 8-bit memory registers;

**Figures 5a** and **5b** represent the three voltage profiles that are cyclically applied to the three-phase windings of a brushless motor according to the present invention, for maintaining in a high saturation condition one of the three windings and the sinusoidal shape of the voltage waveform on the terminal of the phase windings A of the motor deriving from the difference between the voltage being applied to this winding and the CT of the motor when applying the three profiles;

**Figure 5c** shows the differential voltage between the terminals A and B deriving from the difference between the voltage that is being applied to the winding A and the winding B when applying the profiles of figure 5a to the three-phase windings of the motor.

**Figure 6** is an example of block diagram of the system of the invention.

DESCRIPTION OF AN EMBODIMENT OF THE INVENTION

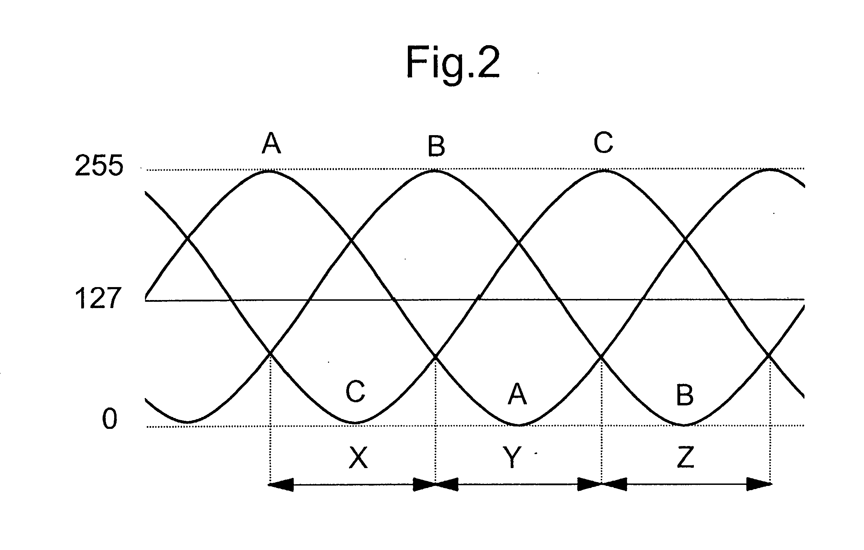

Fig. 2 depicts the voltage profiles that are cyclically applied to the three phase windings (A, B, C), for example according to the driving system illustrated in the prior patent application No. 96830295.0 of the same applicant. In order to simplify the description, reference is made to sinusoidal drive profiles although the ensuing considerations remain obviously valid for the most general case of profiles resulting from a Fourier sum of harmonics of a fundamental phase switching frequency.

The three digitized profiles are numerically represented by samples whose value is expressed in the form of an 8-bit word; the zero voltage being equivalent to the number 127, while the positive peak value and the negative peak value correspond respectively to 255 and 0.

The figure also shows the intervals (X-Y-Z) whose duration is equal to 120 electrical degrees, during which one of the three profiles is lower than the other two.

At any instant it is possible to identify one phase winding on which there exist a voltage lower than the voltage present on the other two.

Precisely, according to Fig. 2, the phases with a lower voltage during the intervals X, Y, Z (each of a duration equal to 120 electrical degrees), are respectively the C, A and B phases.

According to the fundamental aspect of the present invention, during any switching phase, cyclically at least one winding will be in a completely low or high saturation state, while to the other N-1 windings certain recalculated voltage profiles, capable of efficiently drive the motor are applied. In the illustrated example, which refers to the case of a three-phase brushless motor, during the X interval the phase winding in a stable saturation state will be the C winding, during the Y interval will be the A winding and during the Z interval will be the B winding.

In the case of a three-phase motor and by assuming to effectively drive the phase windings with a sinusoidal waveform, (f (t) = sin (t)), the congruently modified voltage profile that must be applied to the terminals of two excited phase windings (that is between a terminal of the winding and ground) according to a PWM mode control, is adequately recalculated, according to the following expressions:

$$\text{Interval} \quad \text{X:} \quad C' = \varnothing; \quad B' = \sin(B) - \sin(C); \quad A' = \sin(A) - \sin(C) \qquad (1)$$

$$\text{Interval} \quad \text{Y:} \quad A' = \varnothing; \quad B' = \sin(B) - \sin(A); \quad C' = \sin(C) - \sin(A) \qquad (2)$$

$$\text{Interval} \quad \text{Z:} \quad B' = \varnothing; \quad A' = \sin(A) - \sin(B); \quad C' = \sin(C) - \sin(B) \qquad (3)$$

By considering the case of a three-phase brushless motor and a sinusoidal type of effective driving (Fig. 2), it may be noticed that there exist three intervals wherein one of voltages is lower that the other two.

Of course, with a different number of motor's phases and/or driving profiles, there will be a different number of intervals during which one or more phases windings have a voltage lower than all the others.

Because the drive voltage profiles preferably should be stored in a memory, it is necessary to convert them in sequences of digital numerical samples (bytes, if an 8-bit memory is employed, as in the example considered) by scaling them by a factor $2^{n-1}$ where n is the number of bits of the data to be stored in the memory.

Of course, the number of samples to digitize the voltage profile is arbitrary.

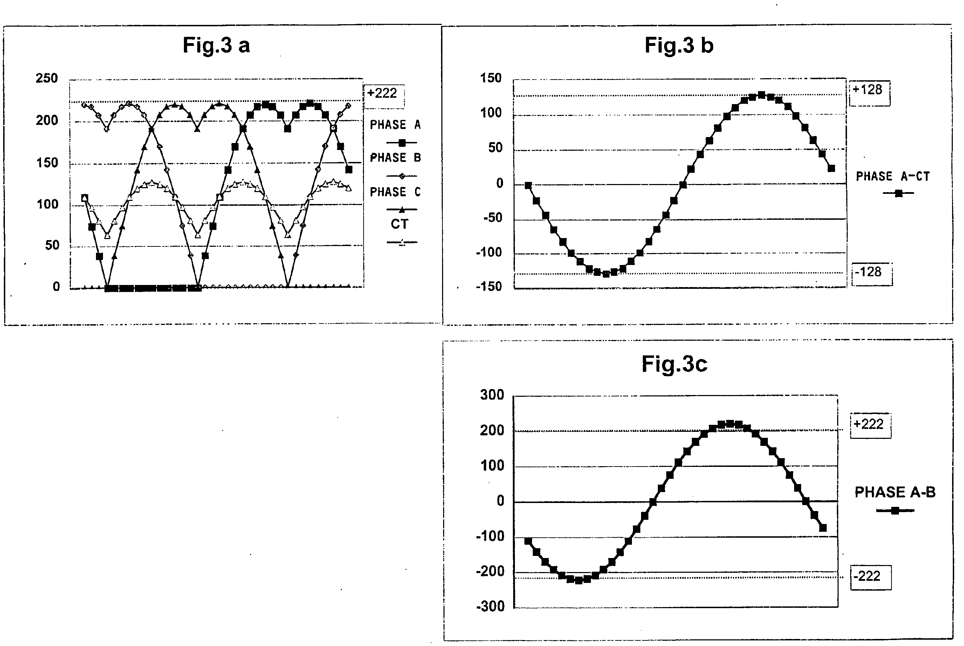

Fig. 3a refers to a three-phase sinusoidal driving system and graphically represents the modified profiles, according to the present invention, in terms of their digital numerical value (byte). It is evident that there exist always a low saturation (0) phase that switches every 120 electrical degrees according to the sequence C-A-B. It should be emphasized that all three phases windings assume periodically such a low saturation state (0) though only one of them is in that state at any instant.

By cyclically applying these modified profiles to the terminals of the star-configured windings of a three phase brushless motor, which is a balanced system, the CT voltage profile, rather that remaining at a constant level (Vcc/2) as in the case of a conventional sinusoidal driving system of all three windings, as described in the patent application No. 96830295.0, is modulated according to the waveform depicted in Fig. 3a. The waveform of the CT, in a balanced star configured three-phase system corresponds to a third of the sum of the three voltages being applied to the three terminals of the windings of the motor.

By virtue of such a CT voltage modulation, despite of the fact that each one of the three phase windings is cyclically kept in a fixed saturation state for 120 electrical degrees, all three motor's windings (that is, between the winding terminal and the CT) there will always be three sinusoidal voltage profiles, out-of-phase among each other by 120 electrical degrees.

What shown in Fig. 3b, in relation to the voltage difference between the phase terminal A and the CT, it is also true for the voltage difference between the phase B and the CT and for the voltage difference between C and CT.

Also the differential voltages between the three motor's terminals (phase-phase) is sinusoidal and also these three sinusoidal profiles are out of phase among each other by 120 electrical degrees, as shown in figure 3c.

Therefore, considering star configured windings, the resulting voltage swing on the single phase winding is equal to 256 ($\pm$128) (Fig. 3b). This digitally expressed dynamic, when converted to an analog dynamic by way of a Byte-to-PWM converter and applied to a half bridge output stage functioning with a power supply of 12V, is equivalent to a dynamic of $\pm$6V. This is equal to what is obtained with the driving system defined in the prior patent application No. 96830295.0 of the same applicant. However, while in the known system such a dynamic is obtained by way of three digital profiles ranging from 0 to 255, according to the method of the present invention the same dynamic is obtained with digital profiles from 0 to 222 (Fig. 3a), always considering the profiles stored in 8-bit registers.

Hence, by scaling with a factor of about 1.14=255/222 the digital profiles of the present invention it is possible to exploit the whole available dynamic (0$\div$255), thus obtaining that the equivalent difference between the digital profile applied to a phase winding terminal and the CT be equal to $\pm$146. Conversion of this digital value into the equivalent analog voltage value gives $\pm$6.84V, with the same supply voltage of 12V.

This is obtained because with the new profiles defined according to the present invention, the CT does not remains fixed at a certain potential, but its potential is modulated, as previously illustrated.

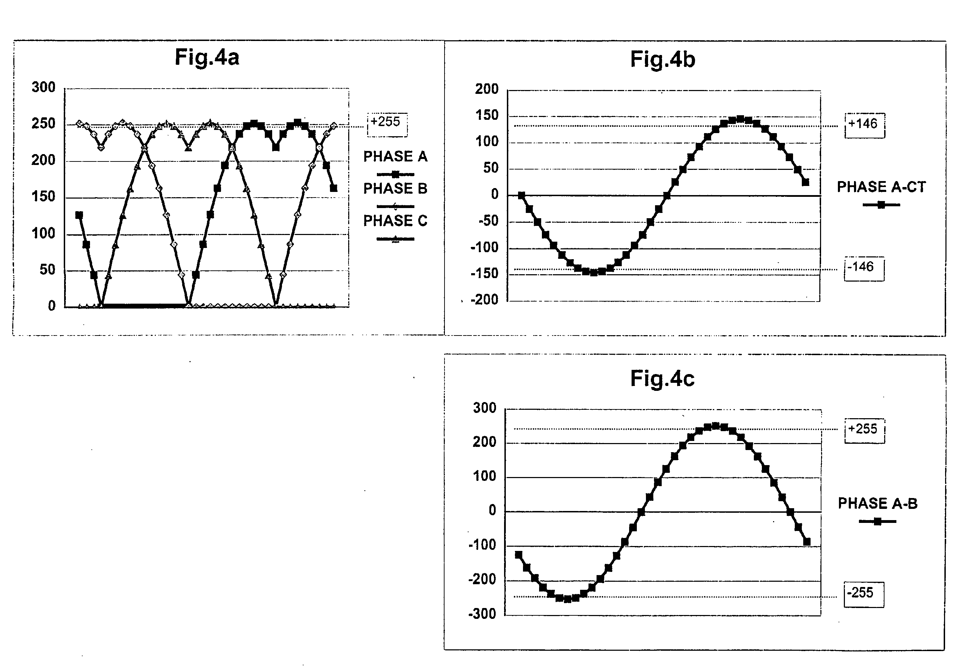

Figures 4a and 4b represent graphically what has just been described. The new profiles are stored exploiting the entire 0 to 255 dynamic as allowed by the 8-bits memory registers used in the example shown.

Thus the stored profile corresponds to the maximum voltage swing applicable to the phase windings.

What explained above is referred to a three phase star configured motor but it is applicable to any other different motor. Indeed, the new voltage profile provides the best solution also regarding the differential voltage swing.

In fact the differential (phase-phase) voltage swing is equal to $\pm$ 6* $\sqrt{3}$ V using the solution defined in the prior patent application No. 96830295.0 of the same applicant, while becomes equal to $\pm$ 12 V according to the present invention.

Of course, should the voltages be modulated to control the speed of the motor, it will be necessary to scale down the voltages by a certain Kval factor, for example by way of a digital multiplier before feeding the so scaled digital values to the Byte-to-PWM converters.

What has heretofore described for the case in which one of the three-phases must be kept in a low saturation state (0) during the respective intervals, each of 120°, is perfectly applicable also to the case in which one of the three-phases must be kept in a high saturation state (255). Of course, this state of saturation will be imposed to the phase winding that in the relative interval has the highest voltage as compared to the other two phase windings.

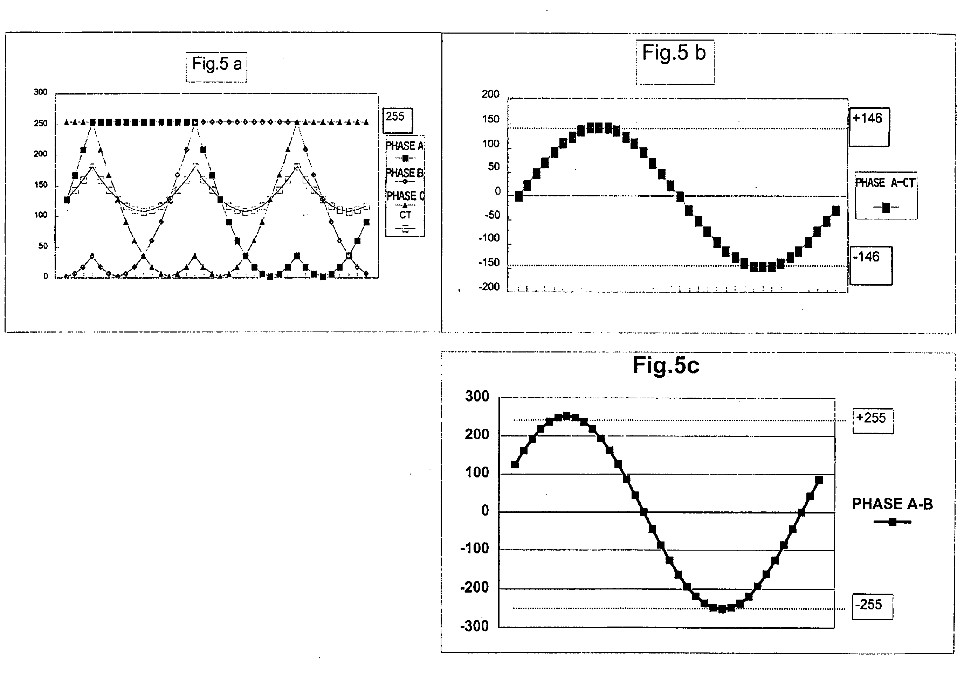

This alternative embodiment of the method of the invention is graphically shown in Figures 5a, 5b and 5c in which the profiles are shown already scaled down to obtain the above discussed increment of dynamics.

The choice of either a low or high fixed saturation profile may depend on the fact that in the first case the current circulates for a longer period of time in the low-side device of the relative half-bridge power stage whereas in the second case the current circulates for a longer period of time in the high-side device.

Therefore, it is possible to choose which devices of the driving half-bridges should work more heavily. For example, if the half-bridges are integrated with a Pmos and Nmos pair (where the Pmos is the high-side device and Nmos is the low-side device), for the same silicon area of integration the Pmos has a Rdson greater than the Nmos thus, by selecting a low fixed saturation profile, the low-side device made by a lower channel resistance Nmos of the half-bridge will work more thus reducing the net power dissipated in the integrated circuit, being the power dissipated dependent from the MOS transistor resistance and by the cube of the current.

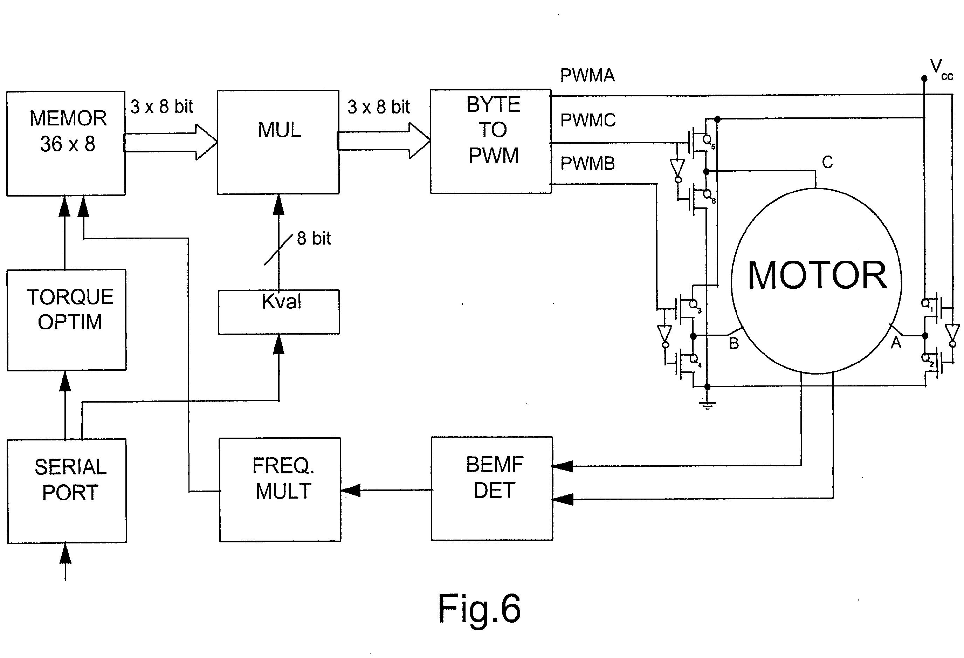

Fig. 6 shows an example a complete block diagram of a driving system of a brushless motor implementing the present invention.

The block MEMOR represents a memory (RAM, ROM, EPROM, ...) in which are stored the samples of the digital profiles, according to the method of the present invention.

The block MUL represents a digital multiplier that provides for the scaling down by a factor contained in the register Kval of each of the three samples (bytes) read from the memory.

The block BYTE-to-PWM performs a PWM conversion of the three samples, suitably scaled by the preceding block. The three output PWM signals of this block are fed to the inputs of the three half-bridge stages composed of the power BJT or MOS (Q1, ..., Q6), which provide for the necessary power gain.

Each output node of the three half-bridges is connected to the terminal of a respective phase winding of the driven brushless motor.

During a switching phase, one of the three digital values at the input of the converter block will be equal to "0" and the corresponding PWM output signal will have a duty cycle of 0%, implementing a state of low saturation of the respective half-bridge.

Alternatively, during a switching phase one of the three digital values at the input of the converter block will be equal to "255" and the corresponding PWM output signal will have a 100% duty cycle, implementing a state of high saturation of the respective half-bridge.

The block BEMF DET detects the rotor's instantaneous position allowing for a correct synchronization between the switchings of the voltage applied to the three-phases with the position of the rotor.

The block FREQ MUL multiplies the frequency originating from the BEMF DET block by a factor equal to the number of samples with which the voltage profile contained in the memory is digitized. Such a multiplied frequency is utilized as the clock for scanning the memory registers.

The register TORQUE OPTIM contains the starting address from which the scanning of the profile stored in the memory must start at the next zero-cross assertion of the back electromotive force (BEMF).

The content of the TORQUE OPTIM and Kval registers may be loaded through a serial port, as schematized in the figure by the block SERIAL PORT.

The system herein described is based on the fact that, when opting to effectively drive the windings with sinusoidal voltage profiles, every 120 electrical degrees one of the three phase windings is alternatively biased in either a low or a high saturation state. This means that if from the memory scan comes a sample sequence corresponding to a portion of the recalculated cyclic profile corresponding to a low or high saturation (if high, the profile portion will have samples of a constant "255" value, whereas, if low, the profile portion will have samples of a constant "Ø" value, for the case of an 8-bit memory), in the half-bridge that controls the particular phase winding, the low-side or high-side transistor is kept ON (for a low or a high saturation, respectively), and the complementary transistor of the same half-bridge is kept OFF. Simultaneously, the other two half bridges switch at the PWM frequency, with a duty-cycle that corresponds to the value of the samples sequentially read from the memory after scaling them by the Kval factor.

For the case of a fixed state of low saturation:

- when phase A is in said state of saturation, the transistor Q2 is kept ON and Q1 is OFF, while Q3, Q4, Q5 and Q6 continuously switch between 0 and Vcc.

- when phase B is in said state of saturation, the transistor Q4 is kept ON and Q3 is OFF, while Q1, Q2, Q5 and Q6 continuously switch between 0 and Vcc.

- when phase C is in said state of saturation, the transistor Q6 is kept ON and Q5 is OFF, while Q1, Q2, Q3 and Q4 continuously switch between 0 and Vcc.

## Claims

1. A method of driving a multiphase brushless motor with N windings wherein all the N windings are driven according to a certain periodic voltage profile intended as the voltage present on each winding, **characterized by** cyclically keeping for a certain time interval at least one of the N windings in a fixed state of low or high saturation while applying to the other phase windings instantaneous voltages according to a predefined periodic profile different from said certain periodic voltage profile and such that the voltage that is actually present on each one of said N windings has a value coherent with said certain periodic voltage profile.

2. The method of claim 1, **characterized in that** the number of intervals, in an entire electric period, in which said fixed high or low saturation state of at least one winding is produced, depends on the predefined driving profile and upon the number N of windings of the motor.

3. The method of driving a multiphase brushless motor in a PWM mode according to claim 1 by way of N half-bridge output stages, **characterized in that** at any instant at least one of the N half-bridge stages is kept in a fixed saturation state, low or high, while the other half bridge stages switch at the PWM frequency, with a duty-cycle varying, in function of a certain scaling of digital samples of said predefined periodic voltage profile.

4. The method of anyone of the preceding claims 1 to 3, wherein said N windings are connected in a star configuration.

5. The method according to anyone of the preceding claims 1 to 3, wherein the N windings are connected in a polygon configuration.

6. The method according to anyone of the preceding claims, wherein said certain periodic voltage profile is sinusoidal.

7. The method according to anyone of the preceding claims, wherein said predefined different periodic profile is digitized with a number of samples stored in a memory and the method includes a conversion of a modulated digital value in a duty cycle percentage value of a PWM driving signal.

**Patentansprüche**

1. Verfahren zum Betreiben eines bürstenlosen Mehrphasenmotors mit N Wicklungen, wobei alle N Wicklungen gemäß eines bestimmten periodischen Spannungsprofils betrieben werden, das als die Spannung vorgesehen ist, die an jeder Wicklung vorhanden ist, **gekennzeichnet durch**:

   zyklisches Halten für ein bestimmtes Zeitintervall mindestens einer der N Wicklungen in einem festen Zustand niedriger oder hoher Sättigung, während an die anderen Phasenwicklungen momentan Spannungen gemäß eines vordefinierten periodischen Profils angelegt werden, das sich von dem bestimmten periodischen Spannungsprofil unterscheidet, und so daß die Spannung, die tatsächlich an jeder der N Wicklungen vorhanden ist, einen Wert aufweist, der mit dem bestimmten periodischen Spannungsprofil kohärent ist.

2. Verfahren nach Anspruch 1, **dadurch gekennzeichnet, daß** die Anzahl der Intervalle in einer vollständigen elektrischen Periode, in der der feste Zustand niedriger oder hoher Sättigung mindestens einer Wicklung erzeugt wird, von dem vordefinierten Betriebsprofil und von der Anzahl N der Wicklungen des Motors abhängt.

3. Verfahren zum Betreiben eines bürstenlosen Mehrphasenmotors in einer PWM-Betriebsart nach Anspruch 1 durch N Halbbrücken-Ausgangsstufen, **dadurch gekennzeichnet, daß** in jedem Augenblick mindestens eine der N Halbrückenstufen in einem festen Sättigungszustand gehalten wird, niedrig oder hoch, während die anderen Halbrückenstufen mit der PWM Frequenz umschalten, mit einem variierenden Tastverhältnis, als Funktion einer bestimmten Skalierung digitaler Abtastwerte des vordefinierten periodischen Spannungsprofils.

4. Verfahren nach einem der vorhergehenden Ansprüche 1 bis 3, wobei die N Wicklungen in einer Sternkonfiguration geschaltet sind.

5. Verfahren nach einem der vorhergehenden Ansprüche 1 bis 3, wobei die N Wicklungen in einer Polygonkonfiguration geschaltet sind.

6. Verfahren nach einem der vorhergehenden Ansprüche, wobei das bestimmte periodische Spannungsprofil sinusförmig ist.

7. Verfahren nach einem der vorhergehenden Ansprüche, wobei das vordefinierte unterschiedliche periodische Profil mit einer Anzahl von Abtastwerten digitalisiert ist, die in einem Speicher gespeichert sind, und das Verfahren eine Umwandlung eines modulierten Digitalwerts in einen Tastverhältnisprozentwert eines PWM-Treibersignals umfaßt.

**Revendications**

1. Procédé de pilotage d'un moteur polyphasé sans collecteur comportant N enroulements, les N enroulements étant tous pilotés selon un certain profil de tension périodique variant comme la tension présente dans chaque enroulement, **caractérisé par** :

   maintenir cycliquement pendant une certaine durée au moins l'un des N enroulements à un état fixe de saturation basse ou haute tandis que l'on applique aux autres enroulements de phase des tensions instantanées selon un profil périodique prédéterminé distinct dudit un certain profil de tension périodique et tel que la tension qui est effectivement présente sur chacun des N enroulements a une valeur cohérente avec ledit un certain profil de tension périodique.

**2.** Procédé selon la revendication 1, **caractérisé en ce que** le nombre d'intervalles, dans une période électrique complète, pendant lequel l'état de saturation fixe haut ou bas dudit au moins un enroulement est produit, dépend du profil de pilotage prédéfini et du nombre N d'enroulements du moteur.

**3.** Procédé de pilotage d'un moteur polyphasé sans collecteur dans un mode PWM selon la revendication 1, au moyen de N étages de sortie en demi-pont, **caractérisé en ce que** à tout instant au moins un des N étages en demi-pont est maintenu dans un état de saturation fixe, bas ou haut, tandis que les autres étages en demi-pont commutent à la fréquence PWM avec un rapport cyclique variant en fonction d'une certaine normalisation des échantillons numériques dudit profil de tension périodique prédéfini.

**4.** Procédé selon l'une quelconque des revendications 1 à 3, dans lequel les N enroulements sont connectés en étoile.

**5.** Procédé selon l'une quelconque des revendications 1 à 3, dans lequel les N enroulements sont connectés en polygone.

**6.** Procédé selon l'une quelconque des revendications précédentes, dans lequel ledit un certain profil de tension périodique est sinusoïdal.

**7.** Procédé selon l'une quelconque des revendications précédentes, dans lequel ledit profil périodique différent prédéfini est numérisé par un nombre d'échantillons mémorisés dans une mémoire et le procédé inclut une conversion d'une valeur numérique modulée en une valeur de pourcentage de rapport cyclique d'un signal de pilotage PWM.

Fig.1a

Fig.1b

Fig.2

**Fig.3 a**

PHASE A
PHASE B
PHASE C
CT

**Fig.3 b**

PHASE A−CT

**Fig.3c**

PHASE A-B

EP 0 955 722 B1

# Fig.4a

PHASE A

PHASE B

PHASE C

+255

# Fig.4b

PHASE A-CT

+146

-146

# Fig.4c

PHASE A-B

+255

-255

EP 0 955 722 B1

Fig.5 b

Fig.5c

Fig.5 a

Fig.6

EP 0 955 722 B1